# EUROPÄISCHE PATENTSCHRIFT

(11) **EP 3 032 133 B1**
(45) Veröffentlichungstag und Bekanntmachung des Hinweises auf die Patenterteilung: **12.06.2019**
(21) Anmeldenummer: 14290375.6
(22) Anmeldetag: 10.12.2014
(51) Int. Cl.: F16F 9/04

(54) **Faltenbalgluftfeder mit Abstandsring**
Folding bellows air spring having a spacer ring
Ressort à air de soufflet doté d'une bague d'écartement

(43) Veröffentlichungstag der Anmeldung: 15.06.2016
(73) Patentinhaber: Contitech France SNC, 92631 Gennevilliers Cedex (FR); ContiTech Luftfedersysteme GmbH, 30165 Hannover (DE)
(72) Erfinder: Racine, Jerome, 95170 Gennevilliers (FR); Gorczynski, Eric, 60600 Agnetz (FR); Mosich, Manuel, 31157 Sarstedt (DE); Vier, Ludovic, 95580 Andilly (FR)
(74) Vertreter: Kilsch, Armin Ralph

(56) Entgegenhaltungen:
- EP-A1- 1 918 609
- EP-A2- 0 274 615
- DE-B- 1 185 421
- DE-B- 1 264 877
- FR-A- 1 424 313

## Beschreibung

Die Erfindung betrifft eine Faltenbalgluftfeder mit zwei oder mehreren als Falte oder Wulst ausgebildeten und durch Einschnürungen getrennten Balgteilen, wobei in den Einschnürungen zwischen den Falten oder Wülsten im Faltenbalg einvulkanisierte Ringe, insbesondere Metallringe angeordnet sind, wobei die Faltenbalgluftfeder mit Hilfe von Anschlussteilen, beispielsweise ausgebildet als Luftfederdeckel und Luftfederfelge oder - kolben, zwischen gefederter und ungefederter Masse befestigt ist und die Falten oder Wülste ballonartig nach außen hervortreten.

Faltenbalgluftfedern herkömmliche Bauart besitzen den Nachteil, dass unter starker Belastung und unter auf die Luftfeder wirkenden Querkräften benachbarte Wülste oder Falten entweder miteinander in Berührung und damit in einen Reibkontakt geraten oder aber mit anliegenden Anschlussteilen oder, wie etwa bei Faltenbalgluftfedern, mit den in den Einschnürungen zwischen den Falten oder Wülsten im Faltenbalg vorhandenen Verdickungen/Verstärkungen der Wand, wie sie z.B. durch einvulkanisierte Metallringe entstehen. So kann eine solche Berührung insbesondere bei Faltenbalgluftfedern für Straßenbahnen oder Schienenfahrzeuge auftreten, die eine nur relativ geringe Eiribauhöhe aufweisen dürfen. Die hier entstehende Reibpaarung kann dazu führen, dass sich die entsprechend in Kontakt stehenden Balgteile stark erwärmen und dann einem erhöhten Reibverschleiß unterworfen sind. Dies kann im Extremfall dazu führen, dass Teile der als Verstärkungselemente in der Balgwand angeordneten Gewebelagen freigelegt werden.

Eine ähnliche Luftfeder mit einem einvulkanisierten Kunststoffring ist aus der EP0274615 A2 bekannt.

Die DE 475626 C offenbart eine Luftfeder für ein Kraftfahrzeug, bei der die Metallringe aus Ringplatten einer solchen Breite bestehen, dass die Ringplatten bei Belastung die einzelnen Schlauchabschnitte oder Wülste vollständig abstützen können, ohne das benachbarte Wülste miteinander in Berührung kommen. Durch diese Anordnung wird der Widerstand .der Luftfeder in waagerechter Richtung beträchtlich erhöht, indem zwischen den verschiedenen Abteilungen und den Ringplatten ein Widerstand geschaffen wird, der genügt, die gestaltliche Veränderung in waagerechter Richtung zu vermeiden oder mindestens innerhalb der fiir die gute Wirkungsweise erforderlichen Grenzen zu erhalten. Die genannten Probleme des Reibverschleißes werden hier etwas zwar gemindert durch die lediglich zwischen Gummi und Metall auftretende Reibung, aber bei Weitem nicht ausreichend verhindert.

Für die Erfindung bestand also die Aufgabe, eine Balgluftfeder, insbesondere eine Faltenbalgluftfeder bereitzustellen, die das Problem des erhöhten Reibverschleißes an benachbarte Wülsten, Falten oder Anschlussteilen bei hohen Belastungen und Querkräften beseitigt, die dabei einfach herzustellen ist und keine zusätzlichen Anforderungen an den Bauraum stellt oder größere Aufwendungen von Zusatzteilen verlangt.

Gelöst wird diese Aufgabe durch die Merkmale des Hauptanspruchs. Weitere vorteilhafte Ausbildungen sind in den Unteransprüchen offenbart.

Dabei ist in den Einschnürungen zwischen einander benachbarten Falten oder Wülsten mindestens ein ringförmiger und die Einschnürung umfassender Abstandshalter angeordnet, der eine Berührung bzw. eine Anlage der Falten oder Wülste an Verstärkungen der Balgwand oder aneinander unter Belastung des Faltenbalgs verhindert. Durch die erfindungsgemäße Ausführung sind die Faltenbalgluftfedern geeignet, auch bei sehr niedrigen Einbauverhältnissen, d.h. bei einem Einbauraum von nur geringer Höhe und hohen Belastungen, sicher zu funktionieren, ohne dass Balgteile oder die Wülste sich aneinander anlegen und damit starke Reibung erzeugen würden. Damit wird die erfindungsgemäße Ausführung einer Faltenbalgluftfeder mit mehreren Falten auch einsetzbar für Fahrwerke in Schienenfahrzeugen, bei denen bekanntermaßen besonders beengte Einbauverhältnisse bestehen. Natürlich können auch mehrere übereinander oder konzentrisch ineinander angeordnete Abstandshalter vorgesehen sein.

Eine vorteilhafte Weiterbildung besteht darin, dass der ringförmige Abstandshalter aus einem weicheren Material besteht als der Faltenbalg, also als so genannter "soft ring" ausgebildet und bei steigender Belastung zu einem flachen Gleitring zusammendrückbar ist. Solche Abstandshalter aus weichen Materialien sorgen bei steigender Belastungen zunächst dafür, dass keine Berührung zwischen den Falten oder Wülsten und anderen Balgteilen stattfindet, und wirken bei steigender Belastung als reibungsvermindernde Zwischenlage, etwa in Form von Gleitringen zwischen den Wülsten.

Eine weitere vorteilhafte Ausbildung besteht darin, dass der ringförmige Abstandshalter einen im Wesentlichen rechteckigen Querschnitt mit abgerundeten Ecken besitzt. Damit vermeidet man punktuelle Reibungen, dadurch entstehen können, dass sich die Form der Abstandshalter beim Zusammendrücken der Falten bzw. Wülste ungünstige verändert und z.B. Druckspitzen bildet.

Eine weitere vorteilhafte Ausbildung besteht darin, dass der ringförmige Abstandshalter als schraubenförmig zusammengelegter und mehrfach die Einschnürungsbereiche umlaufender Ring endlicher Länge ausgebildet ist. Das erleichtert das nachträgliche Einlegen von Abstandshaltern und kann auch für Faltenbalgluftfedern angewendet werden die mit Abstandshaltern nachgerüstet werden. Außerdem sind dann die einzelnen Ringe des Abstandshalters radial gegeneinander oder gegeneinander drehend gleitbeweglich, so dass auch auf die Faltenbalgluftfeder einwirkende starke oder gar oszillierende Querkräfte und Drehbewegungen oder Drehmomente nicht zu Wärmebelastungen durch Reibung führen.

Die erfindungsgemäße Ausbildung besteht darin, dass der ringförmige Abstandshalter aus einem gleitfähigem Kunststoffmaterial besteht, vorzugsweise aus einem Kunststoffmaterial, welches in der Reibpaarung mit dem Material der Faltenbalgluftfeder einen niedrigeren Reibkoeffizienten aufweist als das Material der Faltenbalgluftfeder in der Reibpaarung mit sich selbst.

Einsetzen lässt eine solche erfindungsgemäße Faltenbalgluftfeder besonders gut zur Federung eines Fahrzeugfahrwerks bei dem hohe statische und dynamische Traglasten und große Querkräfte wirken, insbesondere also als Sekundärfederung eines Schienenfahrzeugs oder als Federung eines Kraftfahrzeugs. Natürlich ist die erfindungsgemäße Faltenbalgluftfeder ebenso geeignet als Federung im industriellen Anwendungsbereich, d.h. als Maschinen- oder Fundamentfederung.

Anhand eines Ausführungsbeispiels soll die Erfindung näher erläutert werden. Es zeigen
- Fig. 1: eine erfindungsgemäße Faltenbalgluftfeder
- Fig. 2: eine Faltenbalgluftfeder aus dem Stand der Technik ohne Abstandshalter

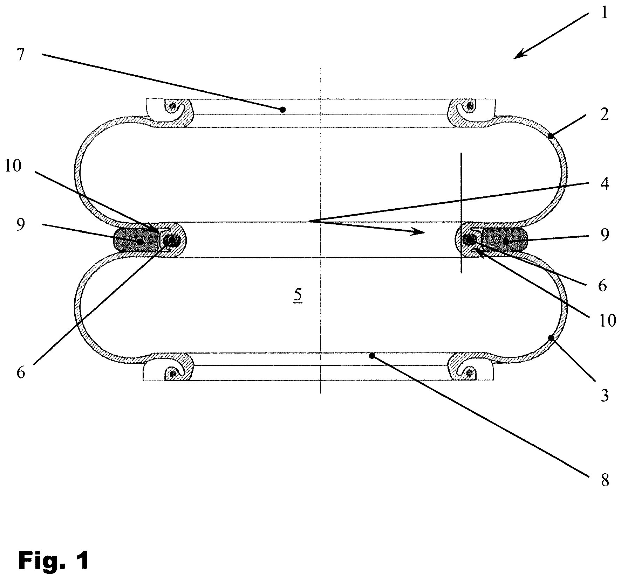

Die Fig. 1 zeigt eine Faltenbalgluftfeder 1 mit zwei als Falte oder Wulst 2 und 3 ausgebildeten und durch eine Einschnürung 4 getrennten Balgteilen, wobei in der Einschnürung 4 zwischen den Falten oder Wülsten 2 und 3 ein im Bereich der Einschnürung in der Wand des Faltenbalgs 5 einvulkanisierter Metallring 6 angeordnet ist. Im Bereich des einvulkanisierten Metallrings bildet die Wand der Faltenbalgluftfeder eine Verstärkung 10, die nach außen gerichtet ist und die eigentliche Einschnürung so definiert.

Die Faltenbalgluftfeder 1 ist mit Hilfe von Anschlussteilen 7 und 8 zwischen hier nicht näher dargestellten gefederten und ungefederten Massen befestigt. Die Falten oder Wülste 2 und 3 treten ballonartig nach außen hervor.

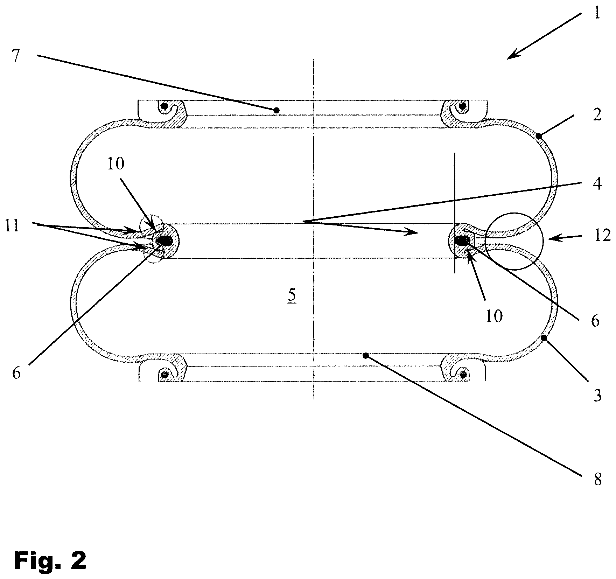

Zwischen den einander benachbarten Balgteilen 2 und 3 ist ein ringförmiger Abstandhalter 9 angeordnet, der eine Berührung bzw. eine Anlage der Falten oder Wülste 2 und 3 aneinander unter Belastung der Faltenbalgluftfeder 1 bzw. des Faltenbalgs 5 verhindert
Fig. 2 zeigt zum Vergleich eine Faltenbalgluftfeder 1 aus dem Stand der Technik, bei der kein Abstandshalter vorhanden ist. Man sieht dort im Bereich der Einschnürung deutlich, dass die nach außen hervortretenden Wülste 2 und 3 bereits an den Verstärkungen 10 anliegen, nämlich in den die Einschnürung definierenden Bereichen 11, in denen eine durch den einvulkanisierten Metallring 6 entstehende bzw. erforderliche Verdickung/Verstärkung 10 der Balgwand ausgeprägt ist. Bei weiter steigender Belastung können sich danach aber auch die Außenseiten der Wülste bzw. Falten 2 und 3 aneinander anlegen, nämlich im Bereich 12. Dann ist zunächst im Bereich 11, dann auch im Bereich 12 mit einem erhöhten Reibverschleiß zu rechnen, der bis zur Freilegung der Gewebelagen und damit zur Schädigung des Faltenbalges 5 führen kann.

### Bezugszeichenliste

### (Teil der Beschreibung)

1 Faltenbalgluftfeder
2 Wulst/Falte
3 Wulst/Falte
4 Einschnürung
5 Luftfederbalg
6 Einvulkanisierter Metallring
7 Anschlussteil
8 Anschlussteil
9 Abstandshalter
10 Verstärkung/Verdickung der Balgwand durch einvulkanisierter Metallring
11 Bereich erhöhter Reibung bei Anlage der Wülste an Verstärkung 10
12 Bereich erhöhter Reibung bei Anlage der Wülste aneinander

## Patentansprüche

1. Faltenbalgluftfeder (1) mit zwei oder mehreren als Falte oder Wulst ausgebildeten und durch Einschnürungen (4) getrennten Balgteilen (2,3), wobei in den Einschnürungen (4) zwischen den Falten oder Wülsten im Faltenbalg (5) einvulkanisierte Ringe (6), insbesondere Metallringe angeordnet sind, wobei die Faltenbalgluftfeder mit Hilfe von Anschlussteilen (7,8) zwischen gefederter und ungefederter Masse befestigt ist und die Falten oder Wülste ballonartig nach außen hervortreten, **dadurch gekennzeichnet, dass** in den Einschnürungen (4)zwischen einander benachbarten Falten oder Wülsten mindestens ein ringförmiger und die Einschnürung (4) außen umfassender Abstandshalter (9) bzw. Abstandsring angeordnet ist, der eine Berührung bzw. eine Anlage der Falten oder Wülste (2,3) an Verstärkungen (10) der Balgwand oder aneinander unter Belastung des Faltenbalgs verhindert, wobei der ringförmige Abstandshalter (9) aus einem gleitfähigen Kunststoffmaterial besteht.

2. Faltenbalgluftfeder nach Anspruch 1, bei der der ringförmige Abstandshalter (9) aus einem weicheren Material besteht als der Faltenbalg (5) und bei steigender Belastung zu einem flachen Gleitring zusammendrückbar ist.

3. Faltenbalgluftfeder nach Anspruch 1 oder 2, bei der der ringförmige Abstandshalter (9) einen im Wesentlichen rechteckigen Querschnitt mit abgerundeten Ecken besitzt.

4. Faltenbalgluftfeder nach Anspruch 1 oder 2, bei der der ringförmige Abstandshalter (9) als schraubenförmig zusammengelegter und mehrfach die Einschnürungsbereiche umlaufender Ring endlicher Länge ausgebildet ist.

5. Verwendung einer Faltenbalgluftfeder nach einem der Ansprüche 1 bis 4 zur Federung eines Fahrzeugfahrwerks, insbesondere als Sekundärfederung eines Schienenfahrzeugs oder als Federung eines Kraftfahrzeugs.

## Claims

1. Corrugated-bellows-type air spring (1) with two or more bellows parts (2, 3) which are in the form of folds or bulges and are separated by constrictions (4), wherein rings (6) which are vulcanized in place, in particular metal rings, are arranged in the constrictions (4) between the folds or bulges in the corrugated bellows (5), wherein the corrugated-bellows-type air spring is fastened between a sprung mass and an unsprung mass with the aid of connection parts (7, 8), and the folds or bulges protrude outwards in a balloon-like manner, **characterized in that** at least one annular spacer (9) or spacer ring which encloses the constriction (4) on the outside is arranged in the constrictions (4) between mutually adjacent folds or bulges, said spacer or spacer ring preventing the folds or bulges (2, 3) from coming into contact with or bearing against reinforcements (10) of the bellows wall or against one another when the corrugated bellows is under load, wherein the annular spacer (9) is composed of a plastics material with sliding properties.

2. Corrugated-bellows-type air spring according to Claim 1, in which the annular spacer (9) is composed of a softer material than the corrugated bellows (5) and can be compressed to form a flat sliding ring as the load increases.

3. Corrugated-bellows-type air spring according to Claim 1 or 2, in which the annular spacer (9) has a substantially rectangular cross section with rounded corners.

4. Corrugated-bellows-type air spring according to Claim 1 or 2, in which the annular spacer (9) is designed as a ring of finite length which is folded helically and encircles the constricting regions a number of times.

5. Use of a corrugated-bellows-type air spring according to one of Claims 1 to 4 for the suspension of a vehicle chassis, in particular as a secondary suspension of a rail vehicle or as a suspension of a motor vehicle.

## Revendications

1. Ressort pneumatique à soufflet (1) comprenant deux ou plusieurs parties de soufflet (2, 3) réalisées sous forme de plis ou de bourrelets et séparées par des rétrécissements (4), des bagues (6), en particulier des bagues métalliques, vulcanisées entre les plis ou les bourrelets dans le soufflet (5) étant disposées dans les rétrécissements (4), le ressort pneumatique à soufflet étant fixé à l'aide de parties de raccordement (7, 8) entre une masse amortie par ressort et une masse non amortie par ressort et les plis ou les bourrelets faisant saillie en forme de ballon vers l'extérieur, **caractérisé en ce que** dans les rétrécissements (4) entre des plis ou des bourrelets adjacents les uns aux autres est disposé au moins un élément d'espacement (9) ou une bague d'espacement de forme annulaire et entourant à l'extérieur le rétrécissement (4), lequel ou laquelle empêche un contact ou une application des plis ou des bourrelets (2, 3) contre des renforcements (10) de la paroi du soufflet ou les uns contre les autres sous l'effet d'une sollicitation du soufflet, l'élément d'espacement de forme annulaire (9) se composant d'un matériau en plastique pouvant glisser.

2. Ressort pneumatique à soufflet selon la revendication 1, dans lequel l'élément d'espacement de forme annulaire (9) se compose d'un matériau plus souple que le soufflet (5) et peut être comprimé pour former une bague de glissement plate sous l'effet de l'augmentation de la sollicitation.

3. Ressort pneumatique à soufflet selon la revendication 1 ou 2, dans lequel l'élément d'espacement de forme annulaire (9) possède une section transversale essentiellement rectangulaire avec des coins arrondis.

4. Ressort pneumatique à soufflet selon la revendication 1 ou 2, dans lequel l'élément d'espacement de forme annulaire (9) est réalisé sous forme de bague de longueur finie assemblée sous forme hélicoïdale et entourant plusieurs fois les régions du rétrécissement.

5. Utilisation d'un ressort pneumatique à soufflet selon l'une quelconque des revendications 1 à 4 pour la suspension à ressort d'un châssis de véhicule, en particulier sous forme de suspension secondaire d'un véhicule ferroviaire ou sous forme de suspension d'un véhicule automobile.
